# EUROPÄISCHE PATENTANMELDUNG

(11) **EP 2 357 052 A1**
(43) Veröffentlichungstag der Anmeldung: **17.08.2011**
(21) Anmeldenummer: 11001041.0
(22) Anmeldetag: 09.02.2011
(51) Int. Cl.: B23D 29/02, B25B 7/12, H02G 1/00

(54) **Handbetätigtes Werkzeug**

(30) Priorität: 12.02.2010 DE 102010007917
(71) Anmelder: Baudat GmbH & Co. KG, 88525 Dürmentingen (DE)
(72) Erfinder: Wolter, Daniel, 88525 Dürmentingen (DE)
(74) Vertreter: Dobler, Markus

(57) **Zusammenfassung**

Es wird ein handbetätigtes Werkzeug (1) mit einer βearbeitungseinrichtung (50,51,60,61) zur Ausübung von Bearbeitungskräften mit Hilfe von zwei Hebelarmen (10,20), die über ein Hebelgelenk (12,55,71) zueinander beweglich angelenkt sind, vorgeschlagen.
Eine daran befindliche Bearbeitungseinrichtung (50,51,60,61) ist mehrteilig, wobei mindestens ein Bearbeitungselement (60,61) beweglich zu einem weiteren Bearbeitungselement (50,51) gelagert sowie mit einer Zahnreihe (62) versehen ist und wobei mindestens ein Bearbeitungselement (50,51) mit einem der Hebelarme (10,20) fest verbunden ist.
Weiterhin ist das Werkzeug mit einer Rastklinke (40), die durch Eingriff in die Zahnreihe (62) die Bewegung des beweglichen Bearbeitungselements (60,61) in eine vorgegebene Richtung verhindern kann,
sowie mit einer Vorschubklinke (30), die zur Bewegung des beweglichen Bearbeitungselements (60,61) in die entgegengesetzte Richtung in die Zahnreihe (62) eingreifen kann, ausgestattet. Koaxial zur Drehachse des Hebelgelenks (12,55,71) ist ein zylindrischer Körper (12) an einem der Hebelarme (10) ausgebildet ist, wobei der zylindrische Körper (12) eine Ausnehmung (13) aufweist, in der die Vorschubklinke (30) drehbeweglich und exzentrisch zur Drehachse des Hebelgelenks (12,55,71) gelagert ist.

## Beschreibung

Die Erfindung betriffz ein handbetätigtes Werkzeug nach dem Oberbegriff des Anspruchs 1.

### Stand der Technik

Werkzeuge, die mit Hilfe zweier Hebelarme von Hand betätigt werden können, sind in den verschiedensten Ausführungen beispielsweise als Scheren oder Zangen bekannt. In manchen technischen Anwendungsbereichen wie z. B. der Energieversorgunqstechnik oder dem Stahlbau müssen zum Durchtrennen von strangförmigen Werkstücken mitunter sehr hohe Kräfte aufgebracht werden können. Zur Verstärkung von Bearbeitungskräften, die in einer Hand oder mit beiden Armen aufgebracht werden können, lassen sich einerseits die Betätigungshebel verlängern, um größere Drehmomente zu erzielen. Allerdings vergrößert sich dabei auch das Werkzeug selbst, wodurch es schwieriger handhabbar werden kann.

Eine weitere Möglichkeit zur Verstärkung der Bearbeitungskraft besteht in der Verkürzung der Hebellänge auf der Abtriebsseite des Hebelgelenks. Dies wird von einer Verkürzung des Arbeitshubs begleitet, der mit einem Betätigungsgang bewirkt werden kann. Dazu sind einige Schub- und Rastmechaniken bekannt, die die Bearbeitung eines Werkstücks mit mehreren Betätigungszyklen des Öffnen und Schließen der Hebel erlauben. Die Trennung mechanischer Funktionen bringt bisweilen eine erhebliche Zunahme mechanischer Komponenten eines Werkzeugs mit sich, die der Steigerung aufbringbarer Bearbeitungskräfte bzw. einer kompakteren Bauweise Grenzen setzen kann.

Aufgabe der Erfindung ist es, ein handbetätigtes Werkzeug der einleitend bezeichneten Art bereitzustellen, das einen vergleichsweise einfacheren Aufbau bietet.

Die Erfindung geht von einem handbetätigten Werkzeug mit einer Bearbeitungseinrichtung zur Ausübung von Bearbeitungskräften mit Hilfe von zwei Hebelarmen, die über ein Hebelgelenk zu einander beweglich angelenkt sind, aus, wcbei die Bearbeitungseinrichtung mehrteilig ist, wcbei mindestens ein Bearbeitungselement beweglich zu einem weiteren Bearbeitungselement gelagert sowie mit einer Zahnreihe versehen ist und wobei mindestens ein Bearbeitungse-ement mit einem der Hebelarme fest verbunden ist sowie mit einer Rastklinke, die durch Eingriff in die Zahnreihe die Bewegung des beweglichen Bearbeitungselements in eine vorgegebene Richtung verhindern kann sowie mit einer Vorschub klinke, die zur Bewegung des beweglichen Arbeitselementes in die entgegen gesetzte Richtung in die Zahnreihe eingreifen kann. Der Kern der Erfindung besteht darin, dass koaxial zur Drehachse des Hebelgelenks ein zylindrischer Körper an einem der Hebelarme ausgebildet ist, wobei der zylindrische Körper eine Ausnehmung aufweist, in der die Vorschubklinke drehbeweglich, insbesondere exzentrisch zur Drehachse des Hebelgelenks gelagert ist. Insbesondere kann sich die drehbewegliche exzentrische Lagerung der Vorschubklinke vollständig innerhalb eines zylindrischen Bereichs um die Drehachse des Hebelgelenks befinden. Dies bietet den Vorteil, dass die Exzentrizität der drehbeweglichen Lagerung der _{V}orschubklinke vergleichsweise klein zur Drehachse des Hebelgelenks gewählt werden kann.

Die Exzentrizität wird dabei durch einen Abstand eines Punktes auf der Drehachse der Vorschubklinke senkrecht zur Drehachse des Hebelgelenks und damit auch der Symmetrieachse des zylindrischen Körpers am entsprechenden Hebel bestimmt. Vorzugsweise sind die Drehachsen des Hebelgelenks und der Vorschubklinke parallel zueinander ausgerichtet, um vorteilhaft zusätzliche Reibung und/oder Lagerkräfte zu vermeiden. Es ist jedoch auch denkbar, dass die Drehachse der Vorschubklinke zumindest um einen kleinen Winkel bezüglich der Drehachse des Hebelgelenks geneigt zu letzterer angeordnet ist.

Vorzugsweise ist der Hebelarm mit dem zylindrischen Körper einstückig ausgebildet. Eine solche Ausführung der Erfindung bietet den Vorteil, dass bei entsprechender Mawerialwahl eine vergleichsweise hohe Belastbarkeit des zylindrischen Körpers am Hebelarm erreicht werden kann. Zugleich ergibt sich dabei die vorteilhafte Möglichkeit, beide Elemente in einem Herstellungsverfahren zu fertigen.

Eine bevorzugte Ausführung der Erfindung sieht vor, dass die Vorschubklinke mit Hilfe eines Bolzens in dem zylindrischen Körper drehbar gelagert ist. An der Vorschubklinke karn z. B. ein Bolzen ausgebildet sein, der in eine passende Bohrung am zylindrischen Körper eingesteckt werden kann. Ebenso kann eine Ausnehmung am zylindrischen Körper so ausgeführt sein, dass dabei ein Bolzen ausgebildet wird, auf den eine Vorschubklinke mit einer vorzugsweise passgenauen Bohrung aufgesteckt werden kann. Damit sind bauteilsparende Ausführungsformen realisierbar.

Eine besonders bevorzugte Ausführung der Erfindung besteht darin, dass eine Ausnehmung im wesentlichen von der Mantelfläche aus radial in das Innere des zylindrischen Körpers reicht, wobei kreisförmige Stirnflächen auf beiden Seiten des zylindrischen Körpers zumindest im Bereich des Kreisumfangs insbesondere der Mantelfläche erhalten bleiben. Dies ermöglicht, dass eine zur Zylinderachse exzentrische Bohrung beispielsweise durch beide Stirnflächen und die Ausnehmung führt, durch die z.B. ein Drehbolzen für eine Lagerung der Vorschubklinke durchgesteckt werden kann. Dadurch können die bei Betätigung auftretenden Hebelkräfte durch zwei Wandabschnitte des zylindrischen Körpers an dessen Stirnflächen über zwei Seiten gleichmäßig, insbesondere symmetrisch auf beispielsweise einen Drehbolzen bzw. die Vorschubklinke übertragen werden.

Ebenso ist es denkbar, dass die Vorschubklinke vergleichbar einem Riegel in eine kanalartige sich nach außen weitende Ausnehmung am zylindrischen Körper eingesteckt wird und beispielsweise von einem elastischen Element in diesem Kanal beweglich gehalten wird. Dies bietet den Vorteil, dass Ausnehmungen am zylindrischen Körper und die Vorschubklinke mit vergleichsweise einfacheren geometrischen Formen hergestellt werden können.

Weiterhin ist es bevorzugte, dass eine Ausnehmung im zylindrischen Körper derart ausgebildet ist, dass die Exzentrizität einer Drehachse der Vorschubklinke eingestellt werden kann. Dies bietet den Vorteil, dass die zur Bearbeitung aufgebrachte Kraft auf ein Werkstück abgestimmt werden kann bzw. gegebenenfalls ein größerer Arbeitshub für eine schnellere Bearbeitung eines Werkstücks gewählt werden kann.

Insbesondere ist eine Ausführung der Erfindung bevorzugt, bei der der zylindrische Körper einen Teil eines Drehlagers des Hebelgelenks bildet. Der zylindrische Körper kann eine Drehwelle des Hebelgelenks bilden. Beispielsweise kann der zweite Hebelarm an einem Ende ein oder mehrere kreisförmige Bohrungen aufweisen, auf die ein Durchmesser des zylindrischen Körpers so abgestimmt ist, dass er in die Bohrung insbesondere passgenau hinein- bzw. hindurchreichen kann. Indem Kräfte der Hebel aufeinander beispielsweise über Bereiche der Zylindermantelfläche des zylindrischen Körpers übertragen werden, kann auf die Anbringung einer separaten Drehwelle in einer engeren Umgebung der Drehachse des Hebelgelenks verzichtet werden. Dadurch kann eine Lage einer Drehachse der drehbeweglichen Vorschubklinke vorteilhaft beliebig nahe zur Drehachse des Hebelgelenks gewählt werden, ohne dabei von der Lage eines anderen Bauteils eingeschränkt zu sein. Insbesondere wenn die Ausnehmung zur Aufnahme der Vorschubklinke sich bis zu keiner der beiden kreisförmigen Stirnflächen des zylindrischen Körpers erstreckt, bietet sich zudem der Vorteil, dass der zylindrische Körper an zwei Seiten von Lagern gestützt werden kann, um eine gleichmäßigere und damit günstigere Kräfteverteilung zu erreichen.

Eine weitere bevorzugte Ausführung der Erfindung besteht darin, dass die Bearbeitungselemente ein Werkstück während der Bearbeitung zumindest zeitweise offen umgreifen. Dies bietet den Vorteil, dass sich das erfindungsgemäße Werkzeug auch an weniger leicht zugängliche Werkstücke ansetzen lässt.

Eine weitere bevorzugte Ausführung besteht darin, dass mindeszens zwei βearbeitungselemente ein Werkstück während der Bearbeitung umschließen. Auf diese weise kann während jeder Phase der Bearbeitung vermieden werden, dass das Werkstück aus dem Bearbeitungsstück entgleitet. Außerdem lassen sich größere Kräfte aufbringen.

In einer bevorzugten Ausbildung der Erfindung ist diese dazu ausgebildet, dass die Bearbeitungseinrichtung dazu ausgelegt ist, ein Werkstück zu schneiden und/oder zu brechen. Eine weitere bevorzugte Ausführung besteht darin, dass die βearbeitungseinrichtung dazu ausgelegt ist, ein Werkstück zu verpressen und/oder zu prägen und/oder einzukerben. Außerdem ist es bevorzugt, dass die Bearbeitungseinrichtung dazu ausgelegt ist, aus einem Werkstück Material auszustanzen. Weiterhir ist es denkbar, dass die Bearbeitungseinrichtung zum biegen, abkanten oder falzen dient. Für jede der genannten Bearbeitungsnethoden können z.B. je nach Materialstärke eines Werkstücks hohe Kräfte zur Bearbeitung erforderlich sein, die mit Hilfe der Erfindung bereitgestellt werden können.

Vorzugsweise weisen die Vorschubklinke und/oder die Rastklinke eine Verzahnung mit mehreren Zähnen zum Eingriff in die Zahnleiste auf. Auf diese weise können sowohl an der Zahnleiste als auch an den Klinken angreifende Kräfte auf mehrere Zahnspitzen bzw. Zahnlücken verteilt werden, wodurch sich eine schädigende Überlastung an einer einzigen Position vorteilhaft vermeiden lässt. Weiterhin können beispielsweise die Klinken doppelt so viele Zähne bzw. Zahnlücken je Längene-nheit als die Verzahnung am beweglichen Bearbeitungselement aufweisen, wodurch über die Strecke eines Arbeitshubs mehr Eingriffspositionen für die Klinken zur Verfügung gestellt werden können. Hierdurch lässt sich die Handhabung des Werkzeugs vorteilhaft erleichtern.

Eine weitere bevorzugte Ausführung der Erfindung sieht vor, dass das bewegliche Bearbeitungselement um eine Drehachse drehbar gelagert und die Zahnleiste zu jeder Drehachse zumindest näherungsweise einen konzentrischen Kreisbogen beschreibt.

Weiterhin ist es bevorzugt, dass ein elastisches Federelement an der Rastklinke und an der Vorschubklinke angebracht ist, wobei das Federelement eine Kraft für einen Eingriff der beiden Klinken in die Verzahnung der beweglichen Bearbeitungselemente aufbringt. Dies bietet den Vorteil, dass auf mehrere getrennte Federelemente für jede der beiden Klinken verzichtet werden kann.

Eine weitere bevorzugte Ausführung der Erfindung besteht darin, dass das handbetätigte Werkzeug dazu ausgebildet ist, dass in mindestens einer Stellung der Hebelarme durch eine Bewegung der Rastklinke beide Klinken aus einem Eingriff in die Verzahnung gelöst werden können. Insbesondere ist es bevorzugt, dass das betätigte Werkzeug dazu ausgebildet ist, in jeder Stellung der Hebelarme ein gemeinsames Lösen beider Klinken durch eine Bewegung der Rastklinke zu ermöglichen. Dies bietet den Vorteil der einfacheren Handhabbarkeit des Werkzeugs nach Abschluss einer Bearbeitung eines Werkstücks.

### Ausführungsbeispiel

Ein Ausführungsbeispiel für die Erfindung wird nachfolgend anhand der Zeichnungen näher erläutert, wobei ggf. auf weitere Einzelheiten und Vorteile der Erfindung hingewiesen wird. Es werden einheitlich die gleichen Bezugszeichen in allen gezeigten Figuren verwendet. Es zeigen
- Figur 1a: eine schematische Skizze einer

- Figur 1b: erfindungsgemäßen Kabelschere mit geöffneter Mechanik; eine schematische Darstellung eines Schnitts durch die Kabelschere entlang der Drehachse des Hebelgelenks bei geschlossener Mechnik;
- Figur 2a: eine schematische Darstellung der Kabelschere bei geöffneten Hebeln in einer zu Fig.la vergleichbaren Darstellung;
- Figur 2b: eine schematische Darstellung eines Schnitts durch die Kabelschere entlang der Drehachse des Hebelgelenks entsprechend Fig.1b.

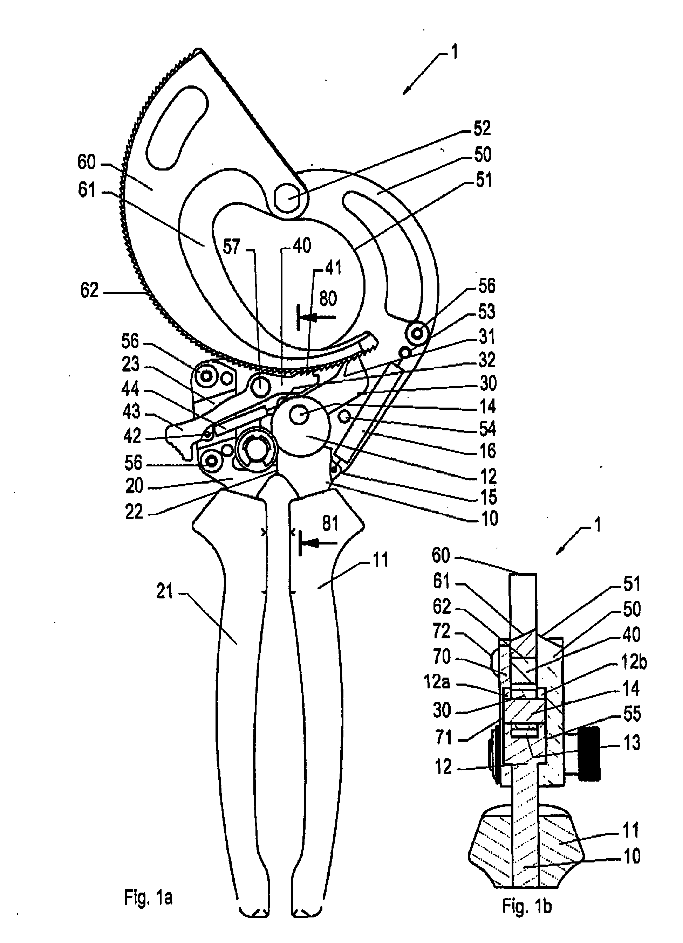

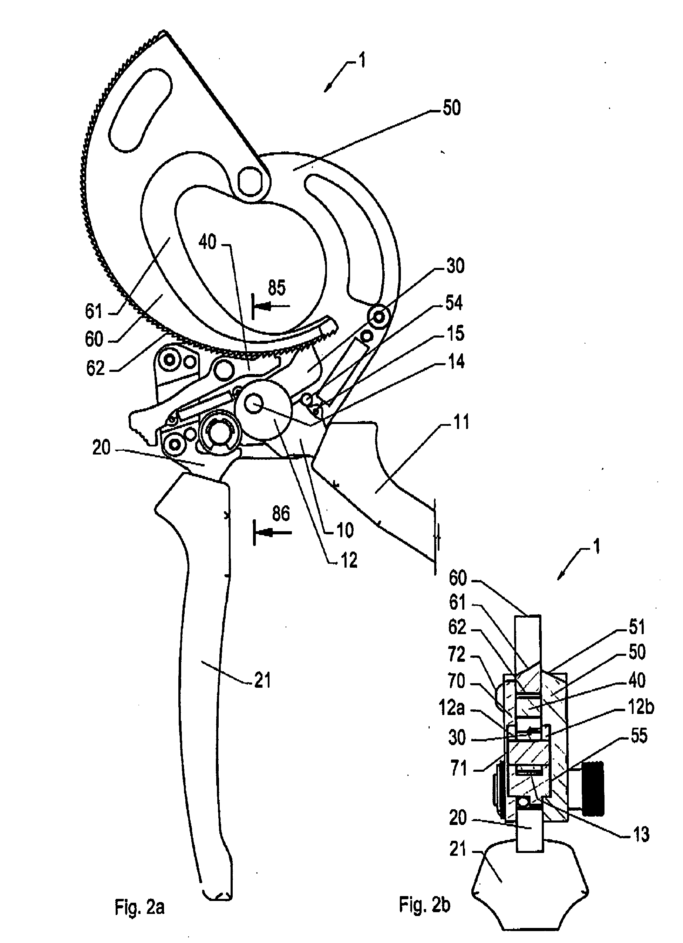

Die Figuren 1a, 1b, 2a und 2b zeigen eine erfindungsgemäße Kabelschere 1, die sich mit einer Hand bedienen lässt. Ein Hebelarm 10 sowie ein Hebelarm 20 sind in Figur 1a in einer zusammengerückten Stellung und in Figur 2a in einer auseinandergerückten Stellung dargestellt. Die Schnittebene der Figur 1b ist in der Figur 1a mit den Markierungen 80,81 gekennzeichnet, entsprechend kennzeichnen die Markierungen 85,86 in Figur 2a die Schnittebene der Darstellung in Figur 2b.

Jeder der Hebelarme 10, 20 ist z.B. von einem ergonomischen Hebelgriff 11 bzw. 21 umgeben. Der Hebelarm 20 ist mit Hilfe von Befestigungsbolzen 56 mit einem feststehenden Messerelement 50 verbunden, welches im Bereich eines Hebelgelenks 12 außerdem als Montageplatte und Gelenklager dient. An einer Innenseite des bogenförmigen Messerelements 50 ist eine Schneidklinge 51 ausgebildet. Am äußersten Ende des Messerelements 50 befindet sich ein Gelenkzapfen 52, an dem ein Schwenkmesser 60 drehbeweglich mit dem feststehenden Messerelement 50 verbunden ist.

Das Schwenkmesser 60 besitzt ebenfalls die Form eines Bogens, der nahezu einen Halbkreis um die Lagerung am Gelenkzapfen 52 bildet. Eine Innenseite des Schwenkmessers 60 ist als Klinge 61 ausgebildet. Die Außenseite des Schwenkmessers bildet einen kreisförmigen Bogen, an dem eine Verzahnung 62 ausgebildet ist. Durch die Bogenform der Messerelemente 50 und 60 kann das Schnittgut von den Klingen 51 und 61 umfasst werden. Durch eine Drehbewegung des Schwenkmessers 60 zum feststehenden Messer 50 kann das Schnittgut von den Klingen 51 und 61 durchschnitten werden.

Der Hebelarm 10 weist an seinem im Werkzeug 1 liegenden Ende einen zylindrischen Körper 12 auf, dessen Symmetrieachse mit der Drehachse des Hebelgelenks übereinstimmt. In Figur 1b ist erkennbar, dass der Hebelarm 10 und der zylindrische Körper 12 einstückig ausgebildet sind. Während in Figur 1a nur eine von zwei kreisförmigen Stirnflächen des zylindrischen Körpers 12 sichtbar ist, zeigt die Figur 1b, dass der zylindrische Körper zwei Stirnwandbereiche 12a und 12b aufweist, zwischen denen eine Ausnehmung 13 liegt.

Die Ausnehmung 13 in Figur 1b dient der Aufnahme einer Vorschubklinke 30, die mit einem Lagerbolzen 14 drehbeweglich in der Ausnehmung 13 gelagert ist. Eine Bohrung parallel und exzentrisch zur Symmetrieachse des zylindrischen Körpers 12 durchdringt die beiden Stirnwandbereiche 12a und 12b im Bereich der Ausnehmung 13 und bietet dabei ein Lager für den Lagerbolzen 14, das diesen an seinen beiden äußeren Enden abstützt.

In Figur 1b ist erkennbar, dass eine Platte des Messerelements 50 eine Ausnehmung 55 aufweiset, die als Lager an den Stirnwandbereich 12b des zylindrischen Körpers 12 angepasst ist. Zusätzlich zeigt die Figur 1b eine Platte 70, die in den Figuren 1a bzw. 2a zwecks Sichtbarkeit anderer Details nicht dargestellt ist. Die Platte 70 besitzt ebenfalls eine zylindrische Ausnehmung 71, in der der zweite Stirnwandbereich 12a des zylindrischen Körpers 12 lagert. Diese Platte 70 wird in einem vorgegebenen Abstand gemeinsam mit dem Hebelarm 20 über die drei Befestigungsbolzen 56 und Schrauben 72 am feststehenden Messerelement 50 befestigt. Auf diese Weise bilden das feststehende Messerelements 50 und die Stahlplatte 70 ein zweiseitig stützendes Lager für den zylindrischen Körper 12. Der zylindrische Körper 12, das Messerelement 50 sowie die Platte 70 bilden gemeinsam das Hebelgelenk des Werkzeugs, an den mit den Hebelarmen 10 und 20 ein Drehmoment aufgebracht werden kann. Durch die exzentrische Anordnung des Lagerbolzens 14 gegenüber der Symmetrie und Drehachse des zylindrischen Körpers 12, kann daher auf die Vorschubklinke 30 mit einem Drehmoment, das durch den Abstand der beiden im zylindrischen Körper 12 liegenden Drehachsen bestimmt wird, eine Antriebskraft ausgeübt werden.

Die Funktionsweise des Scherenantriebs wird durch Vergleich der Figuren 1a und 1b erkennbar. Aufgrund der verschiedenen Stellungen der Hebelarme 10 und 20 befinden sich auch andere Teile der Antriebsmechanik in beiden Figuren in unterschiedlichen Positionen zueinander.

An einer Öse 15 des Hebelarms 10 ist eine Feder 16 eingehängt, deren zweites Ende an einem Spannstift 53 des Messers 50 hängt. Die Feder kann die Hebelarme 10 und 2C auseinanderziehen, beispielsweise bis der Hebelarm 10 auf den Anschlag 54 trifft. Dadurch zieht der Lagerbolzen 14 die Vorschubklinke 3C zu einer Rastklinke 40 hin. Eine unsymmetrische Verzahnung 31 der Vorschubklinke 30 gleitet dabei von der unsymmetrischen Verzahnung 62 des Schwenkmessers 60 ab. Eine zweite Feder 44 ist an eine Öse 42 der Rastklinke 40 und einer Öse 32 der Vorschubklinke 30 eingehängt, um die Verzahnungen 31,41 beider Klinken 30,40 in die Verzahnung 62 des Schwenkmessers zu drücken. Die Rastklinke 40 lagert an einem Lagerzapfen 57 am Messarelement 50 und ist daher über die Befestigungen 56 mit dem Hebelarm 20 verbunden. Beim Öffnen der Hebelarme 10,20 greift die Rastklinke 40 mit ihre= verzahnung 41 in die Verzahnung 62 des Schwenkmessers 60 und hält dieses in seiner aktuelle Position.

Wenr. die Hebelarme zueinandergedrückt werden, greift die Verzahnung 31 der Vorschubklinke in die Verzahnung 62 des Schwenkmessers ein und schleppt dieses der Bewegung des Lagerbolzens 14 und des zylindrischen Körpers 12 entsprechend mit. Die geringe Hebellänge der Exzentrizität des Lagerbolzens 14 kann auf diesen eine vergleichsweise große Kraft bewirken und hat außerdem einen vergleichsweise kurzen Arbeitshub zur Folge, der durch den zweiten Anschlag 22 am Hebelarm 20 begrenzt wird. Bei der durch die Vorschubklinke 30 bewirkten Bewegung des Schwenkmessers 60 gleitet nun die Verzahnung 41 der Rastklinke 40 entlang der Verzahnung 62 des Schwenkmessers 60 ab.

Beide Klinken 30 und 40 weisen jeweils eine Verzahnung 31 bzw. 41 auf, die beide in eine Verzahnung 62 eines Schwenkmessers 60 eingreifen. Über einen Gelenkbolzen 52 ist das Schwenkmesser drehbar am Messerelement 50 befestigt. Wenn nun die Hebelarme 10 und 20 auseinander gezogen werden, gleitet die Vorschubklinke an den unsymmetrischen Zähnen der Verzahnung 62 ab während die Rastklinke 40 das Schwenkmesser 60 in seiner Stellung hält. Werden nun die beiden Hebelarme 10 und 20 zusammengedrückt, so findet die Verzahnung 31 der Vorschubklinke 30 Halt in der Verzahnung 62 des Schwenkmessers 60 während hierbei die Verzahnung 41 der Rastklinke 40 an den Zähnen der Verzahnung 62 abgleitet. Daher kann durch wiederholtes öffnen und Schließen der Hebelarme 10 und 20 das Schwenkmesser 60 stückweise um den Drehbolzen 52 verschwenkt werden, wobei sich die Klingen 61 und 51 des Messerelements 50 und des Schwenkmessers 60 aufeinander zubewegen und ein zwischen den Klingen 51 und 61 eingebrachtes Werkstück durchtrennen können.

Um das Schwenkmesser 60 aus dem Eingriff beider Klinken 30,40 zu lösen, kann der Hebel 43 gegen die Kraft der Feder 44 nach oben gedrückt werden, wobei bei ausreichender Auslenkung die Rastklinke die Vorschubklinke mitnimmt und ebenfalls aus der Verzahnung 62 hebt.

### Bezugszeichenliste:

- 1: Kabelschere
- 10: Hebelarm
- 11: Hebelgriff
- 12: zylindrischer Körper
- 12a: äußeres Lager
- 12b: inneres Lager
- 13: Ausnehmung
- 14: Lagerbolzen
- 15: Öse
- 16: Feder
- 20: Hebelarm
- 21: Hebelgriff
- 22: Anschlag
- 23: Ausnehmung
- 30: Vorschubklinke
- 31: Verzahnung
- 32: Öse
- 40: Rastklinke
- 41: Verzahnung
- 42: Öse
- 43: Lösehebel
- 44: Feder
- 50: Messerelement
- 51: Klinge
- 52: Gelenkzapfen
- 53: Spannstift
- 54: Anschlag
- 55: zylindrische Ausnehmung
- 56: Befestigungsbolzen
- 57: Lagerzapfen
- 60: Schwenkmesser
- 61: Klinge
- 62: Zahnreihe

- 70: Lagerplatte
- 71: zylindrische Ausnehmung
- 72: Schraube
- 80: Markierung
- 81: Markierung
- 85: Markierung
- 86: Markierung

## Patentansprüche

1. Handbetätigtes Werkzeug (1) mit einer Bearbeitungseinrichtung (50,51,60,61) zur Ausübung von Bearbeitungskräften mit Hilfe von zwei Hebelarmen (10,20), die über ein Hebelgelenk (12,55,71) zueinander beweglich angelenkt sind,
wobei die Bearbeitungseinrichtung (50,51,60,61) mehrteilig ist, wobei mindestens ein Bearbeitungselement (60,61) beweglich zu einem weiteren Bearbeitungselement (50,51) gelagert sowie mit einer Zahnreihe (62) versehen ist und wobei mindestens ein Bearbeitungselement (50,51) mit einem der Hebelarme (10,20) fest verbunden ist,
sowie mit einer Rastklinke (40), die durch Eingriff in die Zahnreihe (62) die Bewegung des beweglichen Bearbeitungselements (60,61) in eine vorgegebene Richtung verhindern kann,
sowie mit einer Vorschubklinke (30), die zur Bewegung des beweglichen Bearbeitungselements (60,61) in die entgegengesetzte Richtung in die Zahnreihe (62) eingreifen kann, **dadurch gekennzeichnet, dass** koaxial zur Drehachse des Hebelgelenks (12,55,71) ein zylindrischer Körper (12) an einem der Hebelarme (10) ausgebildet ist, wobei der zylindrische Körper (12) eine Ausnehmung (13) aufweist, in der die Vorschubklinke (30) drehbeweglich und exzentrisch zur Drehachse des Hebelgelenks (12,55,71) gelagert ist.

2. Handbetätigtes Werkzeug (1) nach Anspruch 1, **dadurch gekennzeichnet, dass** der Hebelarm (10) mit dem zylindrischen Körper (12) einstückig ausgebildet ist.

3. Handbetätigtes Werkzeug (1) nach einem der vorgenannten Ansprüche, **dadurch gekennzeichnet, dass** die Vorschubklinke (30) mit Hilfe eines Bolzens (14) in dem zylindrischen Körper (12) drehbar gelagert ist.

4. Handbetätigtes Werkzeug nach einem der vorgenannten Ansprüche, **dadurch gekennzeichnet, dass** der zylindrische
Körper (12) Teil eines Drehlagers des Hebelgelenks (12,55,71) bildet.

5. Handbetätigtes Werkzeug (1) nach einem der vorgenannten Ansprüche, **dadurch gekennzeichnet, dass** die 3earbeitungselemente (50,51,60,61) ein Werkstück während der 3earbeitung zumindest zeitweise offen umgreifen.

6. Handbetätigtes Werkzeug (1) nach einem der vorgenannten Ansprüche, **dadurch gekennzeichnet, dass** die Bearbeitungseinrichtung (50,51,60,61) dazu ausgelegt ist, ein Werkstück zu schneiden und/oder zu blechen.

7. Handbetätigtes Werkzeug (1) nach einem der vorgenannten Ansprüche, **dadurch gekennzeichnet, dass** die Bearbeitungseinrichtung (50,51,60,61) dazu ausgelegt ist, ein Werkstück zu verpressen und/oder zu prägen und/oder einzukerben.

8. Handbet8tigtes Werkzeug (1) nach einem der vorgenannten Ansprüche, **dadurch gekennzeichnet, dass** die Bearbeitungseinrichtung (50,6C) dazu ausgelegt ist, aus einem Werkstücks Material auszustanzen.

9. Handbetätigtes Werkzeug (1) nach Anspruch 1, **dadurch gekennzeichnet, dass** die Vorschubklinke (30) and/oder die Rastklinke (40) eine Verzahnung (31,41) mit mehreren Zähnen zum Eingriff in die Zahnleiste (62) aufweisen.

10. Handbetätigtes Werkzeug (1) nach einem der vorgenannten Ansprüche, dadurch gekennzeichnez, dass das bewegliche Bearbeitungselement (60) um eine Drehachse (52) drehbar gelagert und die Zahnleiste (62) zu dieser Drehachse zumindest näherungsweise einen konzentrischen Kreisbogen beschreibt.

11. Handbetätigtes Werkzeug (1) nach einem der vorgenannten Ansprüche, **dadurch gekennzeichnet, dass** ein elastisches Federelement (44) an der Rastklinke (40) und an der Vorschubklinke (30) angebracht ist, wobei das Federelement (44) eine Kraft für einen Eingriff der beiden Klinken in die Verzahnung (62) am beweglichen Bearbeitungselement (60) aufbringt.

12. Handbetätigtes Werkzeug (1) nach einem der vorgenannten Ansprüche, **dadurch gekennzeichnet, dass** das handbetätigte Werkzeug (1) dazu ausgebildet ist, dass in mindestens einer Stellung der Hebelarme (10,20) durch eine Bewegung der Rastklinke (40) beide Klinken aus einem Eingriff in die Zahnleiste (62) gelöst werden können.

13. Handbetätigtes Werkzeug (1) nach Anspruch 14, **dadurch gekennzeichnet, dass** das handbetätigte Werkzeug (1) dazu ausgebildet ist, in jeder Stellung der Hebelarme (10,20) ein gemeinsames Lösen beider Klinken (30,40) durch eine Bewegung der Rastklinke (40) zu ermöglichen.
